Europäisches Patentamt

European Patent Office

Office européen des brevets

(11) Veröffentlichungsnummer: **0 474 629 B1**

(12) **EUROPÄISCHE PATENTSCHRIFT**

(45) Veröffentlichungstag der Patentschrift: **26.01.94**

(51) Int. Cl.5: **H02M 7/5387**, H02P 7/628

(21) Anmeldenummer: **89906324.2**

(22) Anmeldetag: **31.05.89**

(86) Internationale Anmeldenummer:
**PCT/DE89/00345**

(87) Internationale Veröffentlichungsnummer:
**WO 90/15472 (13.12.90 90/28)**

(54) **VERFAHREN ZUR KOMPENSATION EINES PHASEN- UND AMPLITUDENGANGS ZWISCHEN EINEM MEHRPHASIGEN SOLL- UND ISTWERT UND SCHALTUNGSANORDNUNG ZUR DURCHFÜHRUNG DES VERFAHRENS.**

(43) Veröffentlichungstag der Anmeldung:
**18.03.92 Patentblatt 92/12**

(45) Bekanntmachung des Hinweises auf die
Patenterteilung:
**26.01.94 Patentblatt 94/04**

(84) Benannte Vertragsstaaten:
**DE FR GB IT**

(56) Entgegenhaltungen:
**EP-A- 84 367**

**IECON '84 proceedings, 1984 Int. Conf. on Ind. Elec. Cont. and Instr volume 1, 26 Oktober 1984, IEEE, New York, US, pages 572-574; T. KUGA et al.: "Sinusoidal cyclo-converter for mine hoist drive".**

(73) Patentinhaber: **SIEMENS AKTIENGESELL-SCHAFT**
**Wittelsbacherplatz 2**
**D-80333 München(DE)**

(72) Erfinder: **HÜGEL, Harald**
**Steigerwaldallee 22**
**D-8520 Erlangen(DE)**
Erfinder: **SCHWESIG, Günter**
**Lange Zeile 84**
**D-8520 Erlangen(DE)**

## Beschreibung

Die Erfindung bezieht sich auf ein Verfahren zur Kompensation eines Phasen- und Amplitudengangs zwischen einem mehrphasigen Soll- und Istwert und einer Schaltungsanordnung zur Durchführung des Verfahrens.

Wird eine Führungsgröße W beispielsweise nach einer Zeitfunktion W(t) = W sin ($\alpha$t) an einem bekannten Regelkreis, bestehend aus Sollwerteinsteller, Vergleicher, Regler, Regelstrecke und Meßumformer, vorgegeben, so entsteht in der Regelgröße eine Phasen- und Amplitudenverschiebung bezogen auf die Führungsgröße W. Mit zunehmender Frequenz der Führungsgröße W ändert sich der Phasen- und Amplitudengang zwischen Soll- und Istwert. Auch bei mehrphasigen Regelkreisen entsteht zwischen Soll- und Istwert ein unerwünschter Phasen- und Amplitudengang. Ein mehrphasiger Regelkreis stellt beispielsweise eine konventionelle Stromregelung für einen Drehstromantrieb mit Spannungszwischenkreisumrichter dar. Bei diesem mehrphasigen Regelkreis kann die Amplitude und die Phase des Istwertes verzugsfrei erfaßt bzw. bestimmt werden.

Der Phasen- und Amplitudengang wird bestimmt durch das Übertragungsverhalten des Regelkreises. Ist dieses Übertragungsverhalten bekannt, so kann der Phasen- und Amplitudengang des Regelkreises durch eine Korrektureinrichtung im Führungskanal kompensiert werden. Ist dagegen das Übertragungsverhalten der Regelstrecke eine Funktion der Störgröße oder von Regelgrößen, die nicht bekannt bzw. nicht meßbar sind, abhängig, so kann mittels einer Korrektureinrichtung im Führungskanal der genannten Art der Phasen- und Amplitudengang nur unzureichend kompensiert werden.

Aus dem Lehrbuch "Stromrichter zur Drehzahlsteuerung von Drehfeldmaschinen", Teil III Umrichter, von Erich Eder, 1975, Seiten 102 bis 111, sind Koordinatenwandler bekannt, mit denen aus einem Drehstromsystem ein Zweiphasensystem mit zwei orthogonalen Strömen gebildet wird. Aus diesen beiden orthogonalen Strömen läßt sich ein Stromvektor bilden, der rotiert. Der Betrag dieses Stromvektors und der umlaufende Winkel wird mittels eines K/P-Wandlers (Kartesisch/Polar) gebildet.

Aus der EP 0 084 367 ist ein Verfahren und eine Vorrichtung zur Steuerung eines Wechselstrommotors bekannt, in der eine Stromkompensationsschaltung für den Stromsollwert einer Induktionsmaschine oder einer Synchronmaschine beschrieben wird. Zur Kompensation des Amplitudenganges werden gleichgerichtete Phasenstromistwerte und ein Strombetragsregler verwendet. Der Phasengang kann damit nicht korrigiert werden, da eine physikalisch optimale Kompensation des Amplitudenganges nur möglich ist, wenn der Strombetragsistwert verwendet wird.

Der Erfindung liegt nun die Aufgabe zugrunde, ein Verfahren zur Kompensation eines Phasen- und Amplitudengangs zwischen einem mehrphasigen Soll- und Istwert, wobei der Phasen- und Amplitudengang durch ein von einer Störgröße abhängiges Übertragungsverhalten einer Regelstrecke erzeugt sind, und eine Schaltungsanordnung zur Durchführung dieses erfindungsgemäßen Verfahrens anzugeben.

Diese Aufgabe wird erfindungsgemäß mit den Merkmalen des Anspruchs 1 gelöst.

Durch dieses Verfahren wird zunächst der Betrag und der umlaufende Winkel des aus den mehrphasigen Soll- und Istwert gebildeten Soll- und Istwertvektor bestimmt, wobei dann eine Regeldifferenz für den Betrag und die Phase getrennt ermittelt werden kann. Dieser Betragsdifferenzwert bzw. dieser Winkeldifferenzwert wird mit dem Betragssollwert bzw. mit dem Winkelsollwert des Sollwertvektors addiert. Der so ermittelte kompensierende Sollwertvektor, der als Betrag und umlaufender Winkel vorliegt, wird in einen mehrphasigen kompensierenden Sollwert gewandelt. Dadurch kann man durch das von einer Störgröße abhängige Übertragungsverhalten der Regelstrecke erzeugten Phasen- und Amplitudengang kompensieren. Somit erhält man stationär ein Regelungssystem ohne Phasen- und Amplitudengang zwischen Soll- und Istwert.

Vorteilhafte Verfahrensschritte sind den Unteransprüchen 2 bis 4 zu entnehmen.

Bei einer erfindungsgemäßen Schaltungsanordnung zur Durchführung des Verfahrens mit einer Regelstrecke, der ein mehrphasiger Istwert von einem Stellglied zuführbar ist, und die mittels Vergleicher mit einem mehrphasigen Sollwert verglichen wird, dessen mehrphasige Regeldifferenz über Regler dem Stellglied zuführbar ist, ist der mehrphasige Sollwert einem Sollkorrekturwertrechner zuführbar, an dessen weiteren Eingängen der mehrphasige Istwert ansteht, und ist dieser Sollkorrekturwertrechner mit den Vergleichern elektrisch leitend verbunden.

Vorteilhafte Ausgestaltungen des Sollkorrekturwertrechners sind den Unteransprüchen 6 bis 10 zu entnehmen.

Mit dieser Schaltungsanordnung ist es möglich, einen unerwünschten Phasen- und Amplitudengang zwischen dem mehrphasigen Soll- und Istwert im stationären Zustand zu kompensieren, obwohl das Übertragungsverhalten der Regelstrecke eine Funktion der Störgröße ist.

Eine besonders vorteilhafte Ausführungsform dieser Schaltungsanordnung ist ein Mikrorechner, der mittels eines Rechenprogramms aus dem mehrphasigen gemessenen Istwert und dem eingegebenen mehrphasigen Sollwert den mehrphasigen kompensierenden Sollwert berechnet, so daß ein unerwünschter Phasen- und Amplitudengang zwischen Soll- und Istwert kompensiert wird.

Zur weiteren Erläuterung der Erfindung wird auf die Zeichnung Bezug genommen, in der ein Ausführungsbeispiel der Schaltungsanordnung zur Durchführung des erfindungsgemäßen Verfahrens zur Kompensation eines Phasen- und Amplitudengangs zwischen einem mehrphasigen Soll- und Istwert schematisch veranschaulicht ist.

| | |
|---|---|
| Figur 1 | zeigt einen mehrphasigen Regelkreis mit einer Schaltungsanordnung zur Durchführung des erfindungsgemäßen Verfahrens, in |
| Figur 2 | ist ein Blockschaltbild der Schaltungsanordnung zur Durchführung des erfindungsgemäßen Verfahrens nach Figur 1 dargestellt und die |
| Figuren 3 bis 6 | veranschaulichen Schaltungsbeispiele für die einzelnen Blöcke des Blockschaltbildes der Schaltungsanordnung nach Figur 2. |

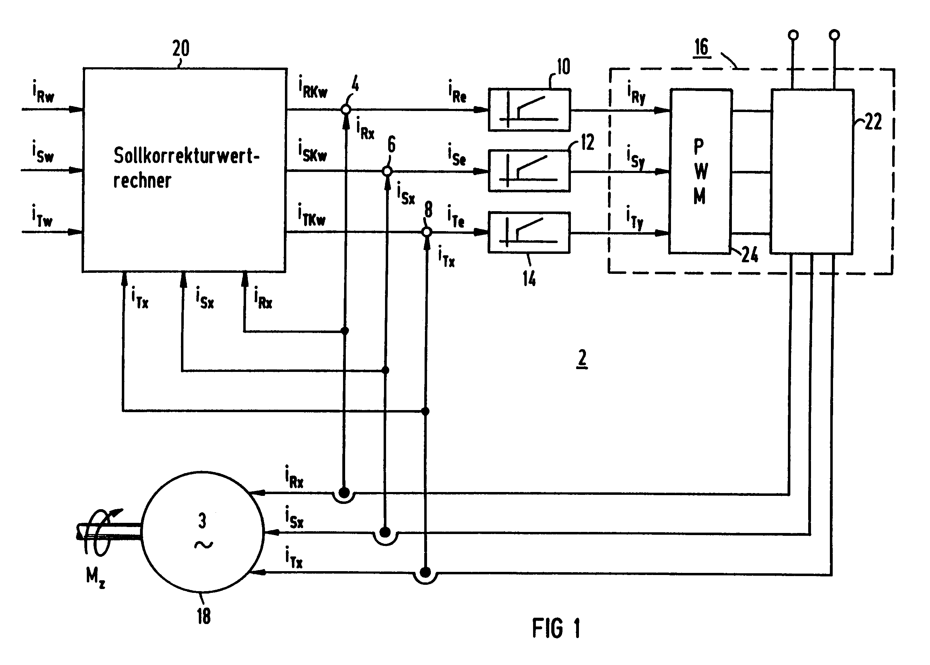

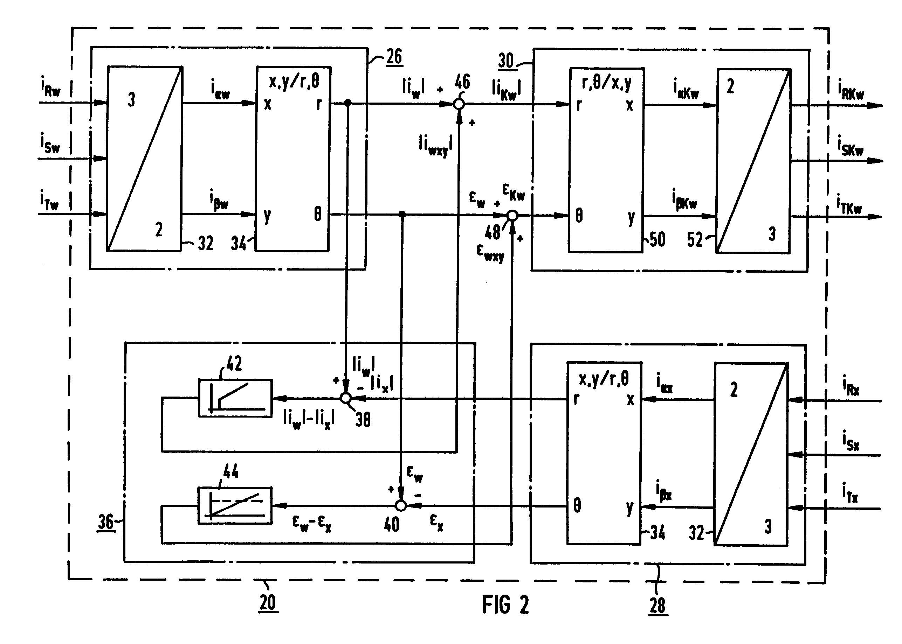

In Figur 1 ist ein mehrphasiger Regelkreis 2 dargestellt, der aus mehreren Vergleichern 4, 6 und 8, mehreren Reglern 10,12 und 14, einem Stellglied 16, einer Regelstrecke 18 und einem Sollkorrekturwertrechner 20 besteht. Als konkrete Ausführung dieses mehrphasigen Regelkreises 2 ist eine konventionelle Stromregelung für einen Drehstromantrieb mit Spannungszwischenkreisumrichter 22, der von einem Pulsweitenmodulator 24 angesteuert wird, vorgesehen. Als Regler 10, 12 und 14 sind Stromregler beispielsweise mit einem proportionalen oder mit einem proportional-integralen Verhalten vorgesehen, die jeweils aus einer Regeldifferenz $i_{Re}$ bzw. $i_{Se}$ bzw. $i_{Te}$ eine Stellgröße $i_{Ry}$ bzw. $i_{Sy}$ bzw. $i_{Ty}$ erzeugt. Als Regelstrecke 18 ist ein Drehstromantrieb vorgesehen, dem vom Stellglied 16 ein mehrphasiger Istwert $i_{Rx}$, $i_{Sx}$ und $i_{Tx}$ zugeführt wird. Das Übertragungsverhalten der Regelstrecke ist auch eine Funktion einer Störgröße $M_z$, die auf der Antriebswelle einwirkt. An den ersten Eingängen des Sollkorrekturwertrechners 20, der in den Figuren 2 bis 6 noch näher erläutert wird, anstehender mehrphasiger Sollwert $i_{Rw}$,$i_{Sw}$ und $i_{Tw}$ wird mit Hilfe des mehrphasigen Istwerts $i_{Rx}$, $i_{Sx}$ und $i_{Tx}$ ein kompensierter, mehrphasiger Sollwert $i_{RKw}$, $i_{SKw}$ und $i_{TKw}$ erzeugt. Dieser kompensierte, mehrphasige Sollwert $i_{RKw}$, $i_{SKw}$ und $i_{TKw}$ wird mit dem mehrphasigen Istwert $i_{Rx}$, $i_{Sx}$ und $i_{Tx}$ phasenrichtig verglichen. Man erhält zwischen dem mehrphasigen Sollwert $i_{Rw}$, $i_{Sw}$ und $i_{Tw}$ und dem mehrphasigen Istwert $i_{Rx}$, $i_{Sx}$ und $i_{Tx}$ bei zunehmender Frequenz des Sollwerts $i_{Rw}$, $i_{Sw}$ und $i_{Tw}$ einen unerwünschten Phasen- und Amplitudengang. Die Frequenz und die Amplitude des mehrphasigen Sollwerts $i_{Rw}$, $i_{Sw}$ und $i_{Tw}$, der über die Regler 10, 12 und 14 und dem Stellglied 16 in die Regelstrecke 18 eingeprägt wird, ist dabei eine Funktion der gewünschten Drehzahl und des Drehmomentes der Drehstrommaschine. Mit Hilfe des Sollkorrekturwertrechners kann dieser unerwünschte Phasen-und Amplitudengang zwischen dem mehrphasigen Soll- und Istwert $i_{Rw}$, $i_{Sw}$, $i_{Tw}$ und $i_{Rx}$, $i_{Sx}$, $i_{Tx}$ kompensiert werden.

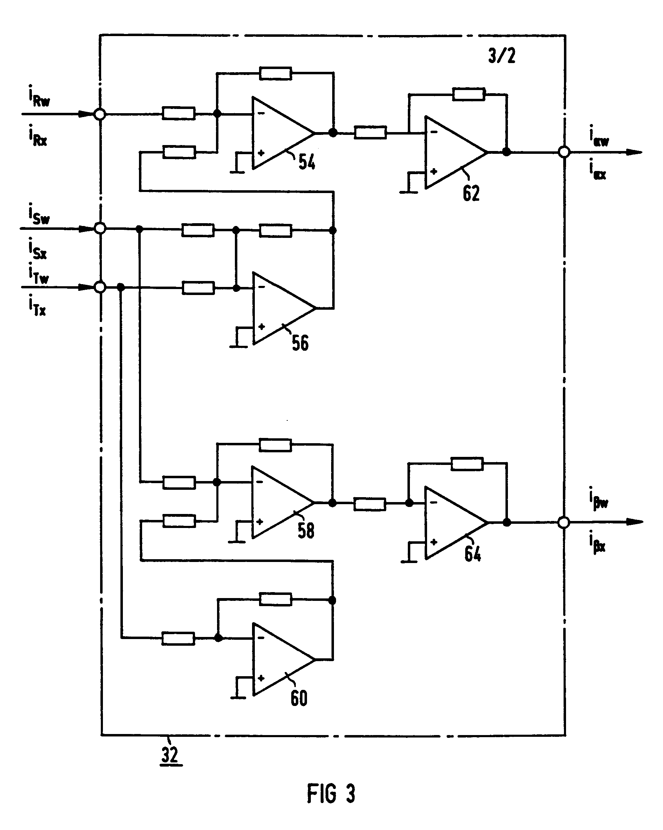

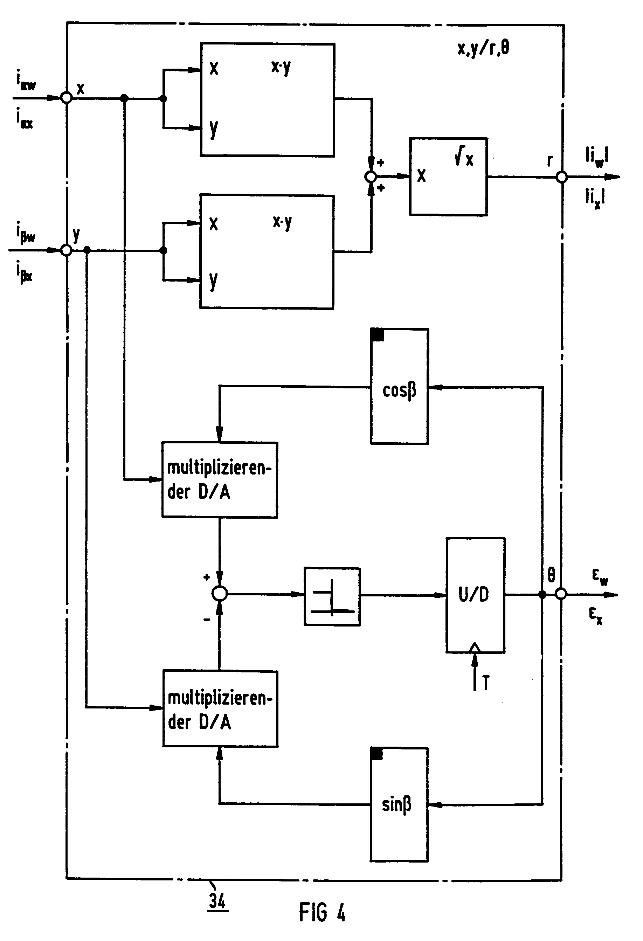

In Figur 2 ist ein Blockschaltbild des Sollkorrekturwertrechners 20 dargestellt. Eingangsseitig ist ein Sollwertvektorrechner 26 und ein Istwertvektorrechner 28 und ausgangsseitig ist ein zweiter Sollwertrechner 30 vorgesehen. Dem Sollwertvektorrechner 26 ist ein mehrphasiger, insbesondere ein dreiphasiger, Sollwert $i_{Rw}$, $i_{Sw}$ und $i_{Tw}$ zugeführt. Dieser Sollwertvektorrechner 26 enthält einen Koordinatenwandler 32 und einen K/P-Wandler 34, die elektrisch in Reihe geschaltet sind. Der Koordinatenwandler 32 wandelt das Dreiphasensystem in ein orthogonales System um. Eine Schaltungsausführung dieses Koordinatenwandlers 32 ist in Figur 3 näher dargestellt. An den Ausgängen des Koordinatenwandlers 32 erhält man zwei orthogonale Sollwerte $i_{\alpha w}$ und $i_{\beta w}$, die mittels des K/P-Wandlers 34 in einen Betragssollwert $|i_w|$ und einen umlaufenden Winkelsollwert $\epsilon_w$ des Stromwertvektors $i^w$ transformiert werden. D.h., mittels des Koordinatenwandlers 34 wird ein kartesisches Koordinatensystem in ein Polarkoordinatensystem gewandelt. Eine Schaltungsausführung dieses K/P-Wandlers 34 ist in Figur 4 näher dargestellt.

Der Istwertvektorrechner 28 ist genauso aufgebaut, wie der Sollwertvektorrechner 26, nämlich mit einem Koordinatenwandler 32 und einem K/P-Wandler 34. Mittels dieser Wandler 32 und 34 wird der mehrphasige, insbesondere dreiphasige, Istwert $i_{Rx}$,$i_{Sx}$ und $i_{Tx}$ über zwei orthogonale Istwerte $i_{\alpha x}$ und $i_{\beta x}$ in einem Betragsistwert $|i_x|$ und einen umlaufenden Winkelistwert $\epsilon_x$ des Istwertvektors $i^x$.

Die Ermittlung des Betragssollwertes $|i_w|$ mit zugehörigem umlaufenden Winkelsollwert $\epsilon_w$ des Sollwertvektors $i^w$ und des Betragsistwertes $|i_x|$ mit zugehörigem umlaufenden Winkelistwert $\epsilon_x$ des Istwertvektors $i^x$ kann hardwaremäßig, wie noch näher in den Figuren 3 und 4 erläutert werden wird, oder softwaremäßig durchgeführt werden. Bei der softwaremäßigen Ermittlung ist jeder Block 26, 28, 30 und 36 des Sollkorrekturwertrechners 20 annähernd durch ein Softwareprogramm realisiert, wobei die eingangs- und ausgangsseitigen Koordinatenwandlungen vorzugsweise hardwaremäßig realisiert werden, da wenigstens der mehrphasige Istwert $i_{Rx}$, $i_{Sx}$ und $i_{Tx}$ ein analoger Wert ist.

Die Ausgänge des Sollwertvektorrechners 26 und des Istwertvektorrechners 28 sind eingangsseitig mit einer Kompensationsschaltung 36 verbunden, wobei der Betragssollwert $|i_w|$ und der Betragsistwert $|i_x|$ mit

3

einem ersten Differenzglied 38 und der Winkelsollwert $\epsilon_w$ und der Winkelistwert $\epsilon_x$ mit einem zweiten Differenzglied 40 verbunden ist. Am Ausgang des ersten Differenzgliedes 38 steht ein Betragsdifferenzwert $|i_w| - |i_x|$ an, aus dem mittels eines Reglers 42 ein Betragsstellwert $|i_{wxy}|$ erzeugt wird, der am Ausgang der Kompensationsschaltung 36 ansteht. Am Ausgang des zweiten Differenziergliedes 40 steht ein Winkeldifferenzwert $\epsilon_w - \epsilon_x$ an, aus dem mittels eines weiteren Reglers 44 ein Winkelstellwert $\epsilon_{wxy}$ erzeugt wird, der an einen weiteren Ausgang der Kompensationsschaltung 36 ansteht. Als Regler 42 ist ein proportional-integral wirkender Regler vorgesehen. Als Regler 44 ist ein integral wirkender Regler vorgesehen. Je mehr der Istwertvektor $i^x$ in Betrag und Phase vom Sollwertvektor $i^w$ abweicht, umso größer ist der Betragsstellwert $|i_{wxy}|$ und der Winkelstellwert $\epsilon_{wxy}$ an den beiden Ausgängen der Kompensationsschaltung 36.

Die Ausgänge des Sollwertvektorrechners 26 und die Ausgänge der Kompensationsschaltung 36 werden mittels zweier Addierer 46 und 48 betrags- und phasenmäßig addiert. Am Ausgang des Addierers 46 steht ein kompensierter Betragssollwert $|i_{Kw}|$ und am Ausgang des Addierers 48 steht ein kompensierter Winkelsollwert $\epsilon_{Kw}$ an. Dieser durch Betrag und Phase dargestellte kompensierte Sollwertvektor $i_K^w$ wird mittels des zweiten Sollwertrechners 30 in einen dreiphasigen kompensierten Sollwert $i_{RKw}$, $i_{SKw}$ und $i_{TKw}$ gewandelt.

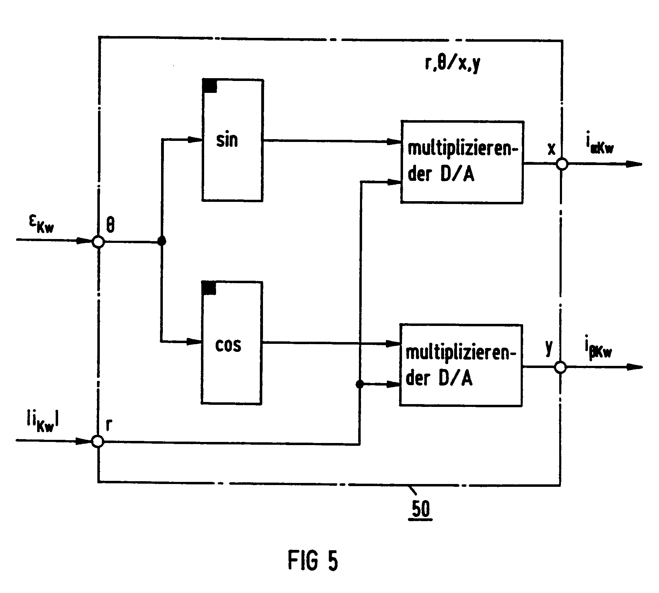

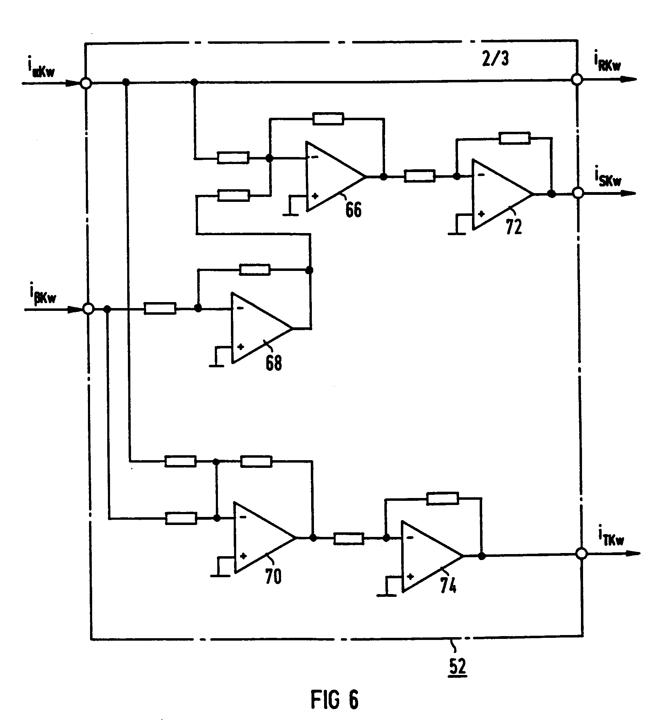

Der zweite Sollwertrechner 30 enthält einen P/K-Wandler 50 (Polar/Kartesisch) und einen Koordinatenwandler 52, die elektrisch in Reihe geschaltet sind. Eingangsseitig weist der Sollwertrechner 30 einen polar-kartesischen Koordinatenwandler 50 auf, mit dem aus dem Betragswert $|i_{Kw}|$ und dem Winkelwert $\epsilon_{Kw}$ zwei orthogonale Sollwerte $i_{\alpha Kw}$ und $i_{\beta Kw}$ erzeugt werden. Diese orthogonalen Sollwerte $i_{\alpha Kw}$ und $i_{\beta Kw}$ werden mittels des Koordinatenwandlers 52 in einen dreiphasigen kompensierten Sollwert $i_{RKw}$, $i_{SKw}$ und $i_{TKw}$ gewandelt. In den Figuren 5 und 6 sind Schaltungsausführungen des P/K-Wandlers 50 und des Koordinatenwandlers 52 dargestellt. Auch dieser zweite Sollwertrechner 30 kann softwaremäßig realisiert werden. Dabei ist ein entsprechendes Programm als ein Unterprogramm im Sollkorrekturwertrechner 20 abgespeichert. Vorteilhaft wäre auch, daß nur der P/K-Wandler 50 softwaremäßig und der Koordinatenwandler 52 hardwaremäßig realisiert werden, wenn die nachfolgende Regelung digital oder analog durchgeführt wird.

Mit Hilfe dieses Sollkorrekturwertrechners 20 wird erreicht, daß der unerwünschte Phasen- und Amplitudengang zwischen dem mehrphasigen Soll- und Istwert $i_{Rw}$, $i_{Sw}$, $i_{Tw}$ und $i_{Rx}$, $i_{Sx}$ und $i_{Tx}$, verursacht vom Übertragungsverhalten der Regelstrecke 18, das von einer Störgröße $M_z$ und der Frequenz des Sollwertes $i_{Rw}$, $i_{Sw}$ und $i_{Tw}$ abhängig ist, kompensiert wird.

In Figur 3 ist eine Schaltungsausführung des Koordinatenwandlers 32 des Sollkorrekturwertrechners 20 der Figur 2 dargestellt. Dieser Koordinatenwandler 32 wandelt ein dreiphasiges System, beispielsweise einen dreiphasigen Sollwert $i_{Rw}$, $i_{Sw}$ und $i_{Tw}$ bzw. einen dreiphasigen Istwert $i_{Rx}$, $i_{Sx}$ und $i_{Tx}$ in ein orthogonales System, beispielsweise orthogonale Sollwerte $i_{\alpha w}$ und $i_{\beta w}$ bzw. orthogonale Istwerte $i_{\alpha x}$ und $i_{\beta x}$ um. Aus dem Buch "Stromrichter zur Drehzahlsteuerung von Drehfeldmaschinen", Teil III Umrichter, Seiten 102 bis 111, insbesondere Seiten 105 und 106, geht hervor, wie aus zwei Phasenströmen eines Drehstromsystems ein Zweiphasensystem mit zwei senkrechten Strömen gebildet wird. Die Achsen des Zweiphasensystems sind dabei so gelegt, daß eine Achse $\alpha$ mit der Richtung des Stromes $i_R$ zusammenfällt. Bei dem hier dargestellten Koordinatenwandler 32 wird der dreiphasige Sollwert bzw. Istwert $i_{Rw}$, $i_{Sw}$, $i_{Tw}$ bzw. $i_{Rx}$, $i_{Sx}$, $i_{Tx}$ zur Berechnung (softewaremäßig) bzw. Ermittlung (hardwaremäßig) verwendet. Gemäß folgender Gleichungen

$$i_{\alpha w,x} = \frac{2}{3} i_{Rw,x} - \frac{1}{3} i_{Sw,x} - \frac{1}{3} i_{Tw,x}$$

$$i_{\beta w,x} = \frac{1}{\sqrt{3}} \cdot i_{Sw,x} - \frac{1}{\sqrt{3}} i_{Tw,x}$$

werden die orthogonalen Soll- bzw. Istwerte $i_{\alpha w}$, $i_{\beta w}$ bzw. $i_{\alpha x}$, $i_{\beta x}$ berechnet oder durch die in der Figur 3 dargestellten Schaltung ermittelt. Durch die Widerstände der einzelnen Operationsverstärker 54, 56, 58 und 60 werden die Faktoren der beiden Gleichungen bestimmt, wobei für den Soll- bzw. Istwert $i_{\alpha w,x}$ nur die beiden Operationsverstärker 54 und 56 verwendet werden. Der als Inverter geschaltete Operationsverstärker 62 bzw. 64 hebt die Phasenumkehrung der Operationsverstärker 54 und 56 bzw. 58 und 60 wieder auf. An den beiden Ausgängen erhält man die orthogonalen Soll- bzw. Istwerte $i_{\alpha w}$, $i_{\beta w}$ bzw. $i_{\alpha x}$, $i_{\beta x}$.

Die Figur 4 zeigt den K/P-Wandler 34 als Schaltungsausführung. Dabei ist der Teil der Schaltung, mit dem der Winkel $\epsilon_w$ bzw. $\epsilon_x$ des Soll- bzw. Istwertvektors $i^w$ bzw. $i^x$ ermittelt wird aus der US-PS 44 49 117 bekannt. Diese Schaltungsausführung ist eine hardwaremäßige Umsetzung der beiden Gleichungen

$$\left| i_{w,x} \right| = \sqrt{ i^2_{\alpha w,x} + i^2_{\beta w,x} }$$

$$\mathcal{E}_{w,x} = \text{arctg} \; \frac{i_{\alpha w,x}}{i_{\beta w,x}} \; ,$$

die auch softwaremäßig umgesetzt werden können.

In Figur 5 ist der P/K-Wandler 50 als Schaltungsausführung dargestellt, mit dem Polarkoordinaten $|i_{Kw}|$, $\epsilon_{Kw}$ in kartesische Koordinaten $i_{\alpha Kw}$, $i_{\beta Kw}$ umgewandelt werden. Diese Umwandlung erfolgt gemäß Gleichungen:

$$i_{\alpha Kw} = |i_{Kw}| \cdot \sin \epsilon_{Kw}$$
$$i_{\beta Kw} = |i_{Kw}| \cdot \cos \epsilon_{Kw}.$$

Diese Gleichungen sind hardwaremäßig umgesetzt worden, wobei bei einem Einsatz eines Mikrorechners als Sollkorrekturwertrechner 20 jeder Wandler 32, 34, 50 und 52 durch einen Programmteil eines Rechenprogramms softwaremäßig umgesetzt werden kann.

In Figur 6 ist der Koordinatenwandler 52 als Schaltungsausführung dargestellt. Dieser Wandler 52 wandelt ein orthogonales System $i_{\alpha Kw}$, $i_{\beta Kw}$ in ein dreiphasiges System $i_{RKw}$, $i_{SKw}$ und $i_{TKw}$ um. Dabei kann das dreiphasige System $i_{RKw}$, $i_{SKw}$ und $i_{TKw}$ mittels folgender Gleichungen

$$i_{RKw} = i_{Kw}$$

$$i_{SKw} = - \frac{1}{2} i_{\alpha Kw} + \frac{\sqrt{3}}{2} i_{\beta Kw}$$

$$i_{TKw} = - \frac{1}{2} i_{\alpha Kw} - \frac{\sqrt{3}}{2} i_{\beta Kw}$$

berechnet werden. Die Schaltungsausführung stellt nur eine hardwaremäßige Umsetzung der drei Gleichungen dar, wobei nur Operationsverstärker 66, 68, 70, 72 und Widerstände zur Faktorbildung verwendet werden.

**Patentansprüche**

1. Verfahren zur Kompensation eines Phasen- und Amplitudengangs zwischen einem mehrphasigen Soll- und Istwert ($i_{Rw}$, $i_{Sw}$, $i_{Tw}$ und $i_{Rx}$, $i_{Sx}$, $i_{Tx}$) bestehend aus folgenden Verfahrensschritten:
   a) Ermitteln eines Betragssollwertes ($|i_w|$) und eines umlaufenden Winkelsollwertes ($\epsilon_w$) eines aus dem mehrphasigen Sollwert ($i_{Rw}$, $i_{Sw}$, $i_{Tw}$) gebildeten Sollwertvektors ($i^w$),
   b) Ermitteln eines Betragsistwertes ($|i_x|$) und eines umlaufenden Winkelistwertes ($\epsilon_w$) eines aus dem mehrphasigen Istwert ($i_{Rx}$, $i_{Sx}$, $i_{Tx}$) gebildeten Istwertvektors,
   c) Vergleichen des Betragssollwertes ($|i_w|$) mit dem Betragsistwert ($|i_x|$), aus dessen Betragsdifferenzwertes ($|i_w|$ - $|i_x|$) ein Betragsstellwert ($|i_{wxy}|$) erzeugte wird, der addiert mit dem Betragssollwert ($|i_w|$) einen kompensierenden Betragssollwert ($|i_{kw}|$) ergibt,
   d) Vergleichen des umlaufenden Winkelsollwertes ($\epsilon_w$) mit dem umlaufenden Winkelistwert ($\epsilon_x$), aus dessen Winkeldifferenzwert ($\epsilon_w$ - $\epsilon_x$) ein Winkelstellwert ($\epsilon_{wxy}$) erzeugt wird, der addiert mit dem Winkelsollwert ($\epsilon_w$) einen kompensierenden Winkelsollwert ($\epsilon_{kw}$) ergibt,
   e) Ermitteln eines mehrphasigen kompensierenden Sollwertes ($i_{RKw}$, $i_{SKw}$, $i_{TKw}$) des aus dem kompensierenden Betragssollwert ($|i_{Kw}|$) und dem kompensierenden umlaufenden Winkelsollwert ($\epsilon_{Kw}$) gebildeten kompensierenden Sollwertvektors ($i_K^w$ ).

2. Verfahren nach Anspruch 1, **dadurch gekennzeichnet,** daß der Sollwertvektor ($i^w$) mittels einer Transformation des mehrphasigen Sollwertes ($i_{Rw}$, $i_{Sw}$, $i_{Tw}$) in orthogonale Sollwerte ($i_{\alpha w}$, $i_{\beta w}$) ermittelt wird, wobei der Betragssollwert ($|i_w|$) und der umlaufende Winkelsollwert ($\epsilon_w$) des Sollwertvektors ($i^w$)

aus den orthogonalen Sollwerten ($i_{\alpha w}$, $i_{\beta w}$) mittels folgender Gleichungen

$$|i_w| = \sqrt{i_{\alpha w}^2 + i_{\beta w}^2}$$

$$\varepsilon_w = \text{arctg} \ \frac{i_{\alpha w}}{i_{\beta w}}$$

ermittelt werden.

3. Verfahren nach Anspruch 1, **dadurch gekennzeichnet,** daß der Istwertvektor ($i^x$) mittels einer Transformation des mehrphasigen Istwertes ($i_{Rx}$, $i_{Sx}$, $i_{Tx}$) in orthogonale Istwerte ($i_{\alpha x}$, $i_{\beta x}$) ermittelt wird, wobei der Betragsistwert ($|i_x|$ und der umlaufende Winkel ($\epsilon_x$) des Istwertvektors ($i^x$) aus den orthogonalen Istwerten ($i_{\alpha x}$, $i_{\beta x}$) mittels folgender Gleichungen

$$|i_x| = \sqrt{i_{\alpha x}^2 + i_{\beta x}^2}$$

$$\varepsilon_x = \text{arctg} \ \frac{i_{\alpha x}}{i_{\beta x}}$$

ermittelt werden.

4. Verfahren nach Anspruch 1, **dadurch gekennzeichnet,** daß der mehrphasige kompensierte Sollwert ($i_{RKw}$, $i_{SKw}$, $i_{TKw}$) mittels folgender Gleichungen

$$i_{RKw} = i_{\alpha Kw}$$

$$i_{SKw} = -\frac{1}{2} i_{\alpha Kw} + \frac{\sqrt{3}}{2} i_{\beta Kw}$$

$$i_{TKw} = -\frac{1}{2} i_{\alpha Kw} + \frac{\sqrt{3}}{2} i_{\beta Kw}$$

ermittelt wird, wobei die orthogonalen kompensierten Sollwerte ($i_{\alpha Kw}$, $i_{\beta Kw}$) mittels folgender Gleichungen

$$i_{\alpha Kw} = |i_{Kw}| \cdot \sin \epsilon_{Kw}$$
$$i_{\beta Kw} = |i_{Kw}| \cdot \cos \epsilon_{Kw}$$

berechnet werden.

5. Schaltungsanordnung zur Durchführung des Verfahrens nach Anspruch 1 mit einer Regelstrecke (18), der ein mehrphasiger Istwert ($i_{Rx}$, $i_{Sx}$, $i_{Tx}$) von einem Stellglied (16) zugeführt wird, und die mittels Vergleicher (4, 6, 8) mit einem mehrphasigen Sollwert ($i_{Rw}$, $i_{Sw}$, $i_{Tw}$) verglichen wird, dessen mehrphasige Regeldifferenz ($i_{Re}$, $i_{Se}$, $i_{Te}$) über Regler (10, 12, 14) dem Stellglied (16) zuführbar ist, **dadurch gekennzeichnet,** daß der mehrphasige Sollwert ($i_{Rw}$, $i_{Sw}$, $i_{Tw}$) einem Sollkorrekturwertrechner (20) zuführbar ist, an dessen weiteren Eingängen der mehrphasige Istwert ($i_{Rx}$, $i_{Sx}$, $i_{Tx}$) ansteht, und daß dieser Sollkorrekturwertrechner (20) mit den Vergleichern (4, 6, 8) elektrisch leitend verbunden ist.

6. Schaltungsanordnung nach Anspruch 5, **dadurch gekennzeichnet,** daß der Sollkorrekturwertrechner (20) eingangsseitig einen Sollwertvektorrechner (26) und einen Istwertvektorrechner (28) hat, die jeweils ausgangsseitig mit einer Kompensationsschaltung (36) verbunden sind, deren Ausgang und der Ausgang des Sollwertvektorrechners (26) über Addierer (46, 48) eingangsseitig mit einem zweiten Sollwertrechner (30) verbunden sind.

7. Schaltungsanordnung nach Anspruch 6, **dadurch gekennzeichnet,** daß der Sollwertvektorrechner (26) einen Koordinatenwandler (32) und einen K/P-Wandler (34) enthält.

8. Schaltungsanordnung nach Anspruch 6, **dadurch gekennzeichnet,** daß der Istwertvektorrechner (28) einen Koordinatenwandler (32) und einen K/P-Wandler (34) enthält.

9. Schaltungsanordnung nach Anspruch 6, **dadurch gekennzeichnet,** daß der zweite Sollwertrechner (30) einen P/K-Wandler (50) und einen Koordinatenwandler (52) enthält.

10. Schaltungsanordnung nach Anspruch 6, **dadurch gekennzeichnet,** daß die Kompensationsschaltung (36) eingangsseitig zwei Differenzglieder (38, 40) aufweist, wobei dem einen ein PI-Regler (42) und dem anderen ein I-Regler (44) nachgeschaltet sind, deren Ausgänge mit den Ausgängen der Kompensationsschaltung (36) verbunden sind.

**Claims**

1. Process for the compensation of a phase and amplitude characteristic between a multiphase desired and actual value ($i_{Rw}$, $i_{Sw}$, $i_{Tw}$ and $i_{Rx}$, $i_{Sx}$, $i_{Tx}$) consisting of the following process steps:

   a) determination of a modulus desired value ($|i_w|$) and a rotary angular desired value ($\epsilon_w$) of a desired value vector ($i^w$) formed from the multiphase desired value ($i_{Rw}$, $i_{Sw}$, $i_{Tw}$),

   b) determination of a modulus actual value ($|i_x|$) and a rotary angular actual value ($\epsilon_x$) of an actual value vector formed from the multiphase actual value ($i_{Rx}$, $i_{Sx}$, $i_{Tx}$),

   c) comparison of the modulus desired value ($|i_w|$) with the modulus actual value ($|i_x|$) from whose modulus differential value ($|i_w| - |i_x|$) there is generated a modulus manipulated variable ($|i_{wxy}|$) which, when added to the modulus desired value ($|i_w|$), produces a compensating modulus desired value ($|i_{kw}|$),

   d) comparison of the rotary angular desired value ($\epsilon_w$) with the rotary angular actual value ($\epsilon_x$) from whose angular differential value ($\epsilon_w - \epsilon_x$) there is generated an angular desired value ($\epsilon_{wxy}$) which, when added to the angular desired value ($\epsilon_w$), produces a compensating angular desired value ($\epsilon_{kw}$),

   e) determination of a multiphase compensating desired value ($i_{RKw}$, $i_{SKw}$, $i_{TKw}$) of the compensating desired value vector ($i_k^w$) formed from the compensating modulus desired value ($|i_{Kw}|$) and the compensating rotary angular desired value ($\epsilon_{Kw}$).

2. Process according to claim 1, characterised in that the desired value vector ($i^w$) is determined by means of a transformation of the multiphase desired value ($i_{Rw}$, $i_{Sw}$, $i_{Tw}$) into orthogonal desired values ($i_{\alpha w}$, $i_{\beta w}$), the modulus desired value ($|i_w|$) and the rotary angular desired value ($\epsilon w$) of the desired value vector ($i^w$) being determined from the orthogonal desired values ($i_{\alpha w}$, $i_{\beta w}$) by means of the following equations

$$|i_w| = \sqrt{i_{\alpha w}^2 + i_{\beta w}^2}$$

$$\mathcal{E}_w = \arctg \frac{i_{\alpha w}}{i_{\beta w}}$$

3. Process according to claim 1, characterised in that the actual value vector ($i^x$) is determined by means of a transformation of the multiphase actual value ($i_{Rx}$, $i_{Sx}$, $i_{Tx}$) into orthogonal actual values ($i_{\alpha x}$, $i_{\beta x}$), the modulus actual value ($|i_x|$) and the rotary angle ($\epsilon x$) of the actual value vector ($i^x$) being determined from the orthogonal actual values ($i_{\alpha x}$, $i_{\beta x}$) by means of the following equations

7

$$|i_x| = \sqrt{i_{\alpha x}^2 + i_{\beta x}^2}$$

$$\mathcal{E}_x = \text{arctg} \ \frac{i_{\alpha x}}{i_{\beta x}}$$

4. Process according to claim 1, characterised in that the multiphase compensated desired value ($i_{RKw}$, $i_{SKw}$, $i_{TKw}$) is determined by means of the following equations

$$i_{RKw} = i_{\alpha Kw}$$

$$i_{SKw} = -\frac{1}{2} i_{\alpha Kw} + \frac{\sqrt{3}}{2} i_{\beta Kw}$$

$$i_{TKw} = -\frac{1}{2} i_{\alpha Kw} + \frac{\sqrt{3}}{2} i_{\beta Kw}$$

the orthogonal compensated desired values ($i_{\alpha Kw}$, $i_{\beta Kw}$) being calculated by means of the following equations

$$i_{\alpha Kw} = |i_{Kw}| \cdot \sin \epsilon_{Kw}$$
$$i_{\beta Kw} = |i_{Kw}| \cdot \cos \epsilon_{Kw}$$

5. Circuit arrangement for carrying out the process according to claim 1, having a control system (18), to which a multiphase actual value ($i_{Rx}$, $i_{Sx}$, $i_{Tx}$) is fed by an actuator (16) and which is compared by means of comparators (4, 6, 8) with a multiphase desired value ($i_{Rw}$, $i_{Sw}$, $i_{Tw}$) whose multiphase system deviation ($i_{Re}$, $i_{Se}$, $i_{Te}$) can be fed to the actuator (16) via controllers (10, 12, 14), characterised in that the multiphase desired value ($i_{Rw}$, $i_{Sw}$, $i_{Tw}$) can be fed to a desired correction value computer (20) at whose further inputs the multiphase actual value ($i_{Rx}$, $i_{Sx}$, $i_{Tx}$) is present, and in that this desired correction value computer (20) is connected in an electrically conductive fashion to the comparators (4, 6, 8).

6. Circuit arrangement according to claim 5, characterised in that on the input side the desired correction value computer (20) has a desired value vector computer (26) and an actual value vector computer (28), which are connected in each case on the output side to a compensation circuit (36) whose output and the output of the desired value vector computer (26) are connected on the input side via adders (46, 48) to a second desired value computer (30).

7. Circuit arrangement according to claim 6, characterised in that the desired value vector computer (26) contains a resolver (32) and a C/P transformer (34).

8. Circuit arrangement according to claim 6, characterised in that the actual value vector computer (28) contains a resolver (32) and a C/P transformer (34).

9. Circuit arrangement according to claim 6, characterised in that the second desired value computer (30) contains a P/C transformer (50) and a resolver (52).

10. Circuit arrangement according to claim 6, characterised in that on the input side the compensation circuit (36) has two differential elements (38, 40), there being connected downstream of one a PI controller (42) and of the other an I controller (44) whose outputs are connected to the outputs of the compensation circuit (36).

## Revendications

1. Procédé pour compenser une allure de phase et d'amplitude entre une valeur de consigne et une valeur réelle polyphasées ($i_{Rw}$, $i_{Sw}$, $i_{Tw}$ et $i_{Rx}$, $i_{Sx}$, $i_{Tx}$), comprenant les étapes opératoires suivantes :

   a) détermination d'une valeur de consigne absolue ($|i_w w|$) et d'une valeur de consigne de l'angle de rotation ($\epsilon_w$) d'un vecteur ($i^w$) de la valeur de consigne, formé à partir de la valeur de consigne polyphasée ($i_{Rw}$, $i_{Sw}$, $i_{Tw}$),

   b) détermination d'une valeur réelle absolue ($|i_x|$) et d'une valeur réelle de l'angle de rotation ($\epsilon_x$) d'un vecteur de la valeur réelle formé à partir de la valeur réelle polyphasée ($i_{Rx}$, $i_{Sx}$, $i_{Tx}$),

   c) comparaison de la valeur de consigne absolue ($|i_w|$) à la valeur réelle absolue ($|i_x|$), à partir de la valeur de différence ($|i_w|-|i_x|$) est produite une valeur de réglage absolue ($|i_{wxy}|$), qui, en étant ajoutée à la valeur de consigne absolue ($|i_w|$), fournit une valeur de consigne absolue compensatoire ($|i_{kw}|$),

   d) comparaison de la valeur de consigne de l'angle de rotation ($\epsilon_w$) à la valeur réelle de l'angle de rotation ($\epsilon_x$), à partir de la valeur de différence ($\epsilon_w-\epsilon_x$) entre lesquelles est formée une valeur de réglage d'angle ($\epsilon_{xy}$), qui, ajoutée à la valeur de consigne de l'angle ($\epsilon_w$), fournit une valeur de consigne d'angle ($\epsilon_w$), fournit une valeur de consigne compensatoire d'angle ($\epsilon_{kw}$),

   e) détermination de la valeur de consigne compensatoire polyphasée ($i_{RKw}$, $i_{SKw}$, $i_{TKw}$) du vecteur compensatoire ($i^w_K$) de la valeur de consigne, qui est formé à partir de la valeur de consigne absolue compensatoire ($|i_{Kw}|$) et de la valeur de consigne compensatoire d'angle de rotation ($\epsilon_{Kw}$).

2. Procédé suivant la revendication 1, caractérisé par le fait que le vecteur ($i^w$) de la valeur de consigne est déterminé au moyen d'une transformation de la valeur de consigne triphasée ($i_{Rw}$, $i_{Sw}$, $i_{Tw}$) en valeurs de consigne orthogonales ($i_{\alpha w}$, $i_{\beta w}$), la valeur de consigne absolue ($|i_w|$) et la valeur de consigne d'angle de rotation ($\epsilon_w$) du vecteur ($i^w$) de la valeur de consigne étant déterminées à partir des valeurs de consigne orthogonales ($i_{\alpha w}$, $i_{\beta w}$) conformément aux relations suivantes :

$$|i_w| = \sqrt{i^2_{\alpha w} + i^2_{\beta w}}$$

$$\epsilon_w = \text{arctg} \frac{i_{\alpha w}}{i_{\beta w}}$$

3. Procédé suivant la revendication 1, caractérisé par le fait que le vecteur ($i^x$) de la valeur réelle est déterminé au moyen d'une transformation de la valeur réelle polyphasée ($i_{Rx}$, $i_{Sx}$, $i_{Tx}$) en valeurs réelles orthogonales ($i_{\alpha x}$, $i_{\beta x}$), la valeur réelle absolue ($|i_x|$) et l'angle de rotation ($\epsilon_x$) du vecteur ($i^x$) de la valeur réelle étant déterminés à partir des valeurs réelles orthogonales ($i_{\alpha x}$, $i_{\beta x}$), conformément aux relations suivantes :

$$|i_x| = \sqrt{i^2_{\alpha x} + i^2_{\beta x}}$$

$$\epsilon_x = \text{arctg} \frac{i_{\alpha x}}{i_{\beta x}}$$

4. Procédé suivant la revendication 1, caractérisé par le fait que la valeur de consigne compensée polyphasée ($i_{RKw}$, $i_{SKw}$, $i_{TKw}$) est déterminée conformément aux relations suivantes

$$i_{RKw} = i_{\alpha Kw}$$

$$i_{SKw} = -\frac{1}{2} \, i_{\alpha Kw} + \frac{\sqrt{3}}{2} \, i_{\beta Kw}$$

$$i_{TKw} = -\frac{1}{2} \, i_{\alpha Kw} + \frac{\sqrt{3}}{2} \, i_{\beta Kw}$$

les valeurs de consigne orthogonales compensées ($i_{\alpha Kw}$, $i_{\beta Kw}$) étant calculées conformément aux relations suivantes

$$i_{\alpha Kw} = |i_{Kw}| \cdot \sin \epsilon_{Kw}$$
$$i_{\beta Kw} = |i_{Kw}| \cdot cps \, \epsilon_{Kw}$$

5. Montage pour la mise en oeuvre du procédé suivant la revendication 1, comportant une section de régulation (18) à laquelle un circuit de réglage (16) envoie une valeur réelle polyphasée ($i_{Rx}$, $i_{Sx}$, $i_{Tx}$) et qui est comparée, au moyen de comparateurs (4,6,8), à une valeur de consigne polyphasée ($i_{Rw}$, $i_{Sw}$, $i_{Tw}$), dont la différence polyphasée de régulation ($i_{Re}$, $i_{Se}$, $i_{Te}$) peut être envoyée par l'intermédiaire de régulateurs (10,12,14) au circuit de régulation (16), caractérisé par le fait que la valeur de consigne polyphasée ($i_{Rw}$, $i_{Sw}$, $i_{Tw}$) est envoyée à un calculateur (20) de la valeur de correction de consigne, aux autres entrées duquel est appliquée la valeur réelle polyphasée ($i_{Rx}$, $i_{Sx}$, $i_{Tx}$), et que ce calculateur (20) de la valeur de correction de consigne est relié d'une manière électriquement conductrice aux comparateurs (4,6,8).

6. Montage suivant la revendication 5, caractérisé par le fait que le calculateur (20) de la valeur de correction de consigne comporte, côté entrée, un calculateur (26) du vecteur de la valeur de consigne et un calculateur (28) du vecteur de la valeur réelle, qui sont reliés respectivement, côté sortie, à un circuit de compensation (36), dont la sortie est raccordée, ainsi que la sortie du calculateur (26) du vecteur de la valeur de consigne, par l'intermédiaire d'additionneurs (46,48), au côté entrée d'un second calculateur (30) de la valeur de consigne.

7. Montage suivant la revendication 6, caractérisé par le fait que le calculateur (26) du vecteur de la valeur de consigne comporte un transformateur de coordonnées (42) et un convertisseur de coordonnées cartésiennes en coordonnées polaires (34).

8. Montage suivant la revendication 6, caractérisé par le fait que le calculateur (28) du vecteur de la valeur réelle comporte un transformateur de coordonnées (32) et un convertisseur de coordonnées cartésiennes en coordonnées polaires (34).

9. Montage suivant la revendication 6, caractérisé par le fait que le second calculateur (30) de la valeur de consigne comporte un transformateur de coordonnées polaires en coordonnées cartésiennes (50) et un transformateur de coordonnées (52).

10. Montage suivant la revendication 3, caractérisé par le fait que le circuit de compensation (36) comporte, côté entrée, deux circuits de soustraction (38,40), en aval de l'un desquels est branché un régulateur à action proportionnelle et intégrale (42) et en aval de l'autre desquels est branché un régulateur à action intégrale (44), les sorties de ces régulateurs étant raccordées aux sorties du circuit de compensation (36).

FIG 1

$i_{Rw}$  $i_{Sw}$  $i_{Tw}$

3 / 2  $\underline{32}$  $\underline{34}$

$i_{\alpha w}$  $i_{\beta w}$

x,y/r,θ

x  y  r  θ

$\underline{26}$

$|i_w|$  46  $|i_{Kw}|$

$|i_{wxy}|$  +  +

$\varepsilon_w$  $\varepsilon_{Kw}$  48  +  +  $\varepsilon_{wxy}$

$\underline{30}$

r,θ/x,y

r  θ  x  y

$i_{\alpha Kw}$  $i_{\beta Kw}$

$\underline{50}$  52  2 / 3

$i_{RKw}$  $i_{SKw}$  $i_{TKw}$

42  $|i_w|$  $|i_x|$  +  −  38  $|i_w|-|i_x|$

44  $\varepsilon_w$  +  −  40  $\varepsilon_x$  $\varepsilon_w-\varepsilon_x$

$\underline{36}$

x,y/r,θ

r  x  θ  y

$i_{\alpha x}$  $i_{\beta x}$

2 / 3  $\underline{34}$  32

$i_{Rx}$  $i_{Sx}$  $i_{Tx}$

$\underline{20}$  FIG 2  $\underline{28}$

EP 0 474 629 B1

FIG 3

FIG 4

FIG 5

EP 0 474 629 B1

FIG 6

16